# EUROPÄISCHE PATENTSCHRIFT

(11) **EP 2 589 451 B1**
(45) Veröffentlichungstag und Bekanntmachung des Hinweises auf die Patenterteilung: **07.09.2016**
(21) Anmeldenummer: 12005482.0
(22) Anmeldetag: 27.07.2012
(51) Int. Cl.: B23B 51/10

(54) **Druckmittelgesteuertes Senkwerkzeug mit einer Kolben-Zylindereinheit**
Hydraulically powered lowering tool with a piston-cylinder unit
Outil pour lamer piloté par un moyen de pression avec une unité de cylindre à piston

(30) Priorität: 03.11.2011 DE 102011117525
(43) Veröffentlichungstag der Anmeldung: 08.05.2013
(73) Patentinhaber: Heule Werkzeug AG, 9436 Balgach (CH)
(72) Erfinder: Studer, Harry, 9436 Balgach (CH)
(74) Vertreter: Riebling, Peter

(56) Entgegenhaltungen:
- DE-A1-102008 004 516
- DE-A1-102008 044 802
- DE-A1-102009 007 041
- US-A- 5 927 911
- US-A1- 2010 014 933

## Beschreibung

Die Erfindung betrifft ein druckmittelgesteuertes Senkwerkzeug mit einer Kolben-Zylindereinheit nach dem Oberbegriff des Patentanspruches 1.

Ein kolbenloses, druckmittelgesteuertes Senkwerkzeug ist mit der auf den gleichen Anmelder zurückgehenden DE 10 2009 012 996 A1 bekannt geworden. Bei dem kolbenlosen, druckmittelgesteuerten Senkwerkzeug nach der DE 10 2009 012 996 A1 wird das Messer durch Fliehkraft des sich drehenden Senkwerkzeuges ausgeschwenkt und in seiner ausgeschwenkten Lage durch Fliehkraft stabil gehalten, während die einwärts gerichtete Schwenkbewegung, die das Messer in eine nicht-schneidende, passive Position bringt, durch ein Druckmittel erfolgt.

Das Druckmittel - bevorzugt das Kühlmedium - strömt unmittelbar auf eine Anströmfläche des Messers, um dieses in die passive, nicht-schneidende Stellung in den Grundkörper des Messergehäuse zu verschwenken.

Ein solches druckmittelgesteuertes Senkwerkzeug nach der DE 10 2009 012 996 A1 hat sich in großem Umfang bewährt. Es hat sich jedoch herausgestellt, dass die Einschwenkkraft relativ gering ist und vor allem vom Druck des Druckmittels, d. h. des Kühlmediums abhängt, so dass ein geordnetes Zurückschwenken des Messers nicht immer gewährleistet ist.

Dieses bekannte druckmittelgesteuerte Senkwerkzeug besticht jedoch durch seine besondere Einfachheit und Prozesssicherheit.

Mit der Druckschrift US 5 927 911 A wird ein Druckmittel gesteuertes Senkwerkzeug mit einem oder mehreren spanabhebenden Messern offenbart, die durch die Zuführung eines Druckmittels in ihre Schwenklage betätigbar sind, wobei die Betätigung mindestens eines Messers über ein Druckmittel betätigte Kolben-Zylindereinheit erfolgt. Die Kraftübertragung erfolgt zwischen der Kolben-Zylindereinheit und dem Messer über eine Zahnstange, was jedoch den Nachteil hat, dass die hohen Drehmomente ausgehend von dem Messer auf die Zahnstange übertragen werden und dadurch ein Verschleiß entsteht.

Die DE 10 2009 007 041 A1 zeigt ein Werkzeug zur spanenden Bearbeitung eines Werkstückes mit einem bewegbaren Zerspanelement. Das dort gezeigte Messer wird direkt durch eine Kolben-Zylindereinheit und einem zugeordneten Steuerbolzen angesteuert, wodurch es sich um die Schwenkachse dreht und hiermit das vordere Ende des Messers in Eingriff mit der Innenbohrung bringt. Dadurch besteht jedoch der Nachteil, dass eventuelle Späne, die beim Bearbeiten der Innenbohrung entstehen, unmittelbar sich auf die Berührungsfläche zwischen dem Steuerbolzen und dem frei schwenkbaren Ende des Gratmessers ablagern und somit zu einer Störung führen.

Auch die US 2010/014933 A1 zeigt ein zwangsgesteuertes Senkmesser, welches durch direkte Einwirkung einer Kolben-Zylindereinheit aus dem Messerfenster herausfahrbar ist. Wesentlicher Nachteil ist hierbei, dass die Kräfte des Messers direkt auf die Kolben-Zylindereinheit übertragen werden, was zu einem erhöhten Verschleiß führt.

Mit der DE 10 2008 044 802 A1 wird mit einem Kolben das Messer in die Arbeitslage verschwenkt. Das Einfahren des Messers erfolgt über eine Lenkeranordnung oder über eine Rückstellfeder. Solch eine Ausführungsform ist jedoch sehr aufwendig, da sowohl für das Ausschwenken, als auch für das Einschwenken des Messers eine Vorrichtung benötigt wird.

Der Erfindung liegt deshalb die Aufgabe zugrunde, ein druckmittelgesteuertes Senkwerkzeug nach dem Gegenstand der DE 10 2009 012 996 A1 so weiterzubilden, dass eine noch weitere Erhöhung der Prozesssicherheit in dem Sinne gegeben ist, dass eine höhere Rückstellkraft auf das ausgeschwenkte Messer erzielt werden kann.

Zur Lösung dieser Aufgabe ist die Erfindung durch die technische Lehre des Anspruches 1 gekennzeichnet.

Wesentliches Merkmal der Erfindung ist, dass die Betätigung des Messers nicht mehr unmittelbar durch die Anströmung eines Druckmittels erfolgt, sondern indirekt und mittelbar durch einen Kolben, der seinerseits von dem Druckmittel betätigt wird, wobei die Verschiebung des Kolbens über einen oder mehrere Steuerbolzen oder andere Betätigungsglieder auf das freie verschwenkbare Ende des Messers einwirkt.

Es handelt sich also um eine mittelbare Betätigung des einen oder der mehreren Messer durch mindestens eine Kolben-Zylindereinheit, die aus dem Kolben und dem vom Kolben betätigten Steuerbolzen besteht.

Statt einem stiftförmigen Steuerbolzen können auch andere Betätigungsglieder verwendet werden, wie z. B. eine Steuerscheibe, die mit entsprechenden Ausnehmungen als Kurvenscheibe ausgebildet ist und die direkt lastübertragend am freien schwenkbaren Ende des Messers mit ihrem Außenumfang anliegt.

Wichtig bei der Erfindung ist, dass nun eine mittelbare Betätigung des Einschwenkens des Messers durch einen Kolben erfolgt, der von dem Druckmittel verschiebbar angeströmt ist.

Der Kolben ist demzufolge in einer Zylinderkammer angeordnet und dort verschiebbar gelagert, wobei die Rückstellkraft des Kolbens durch eine Feder oder einen anderen Kraftspeicher erfolgt.

In einer besonders einfachen Ausführungsform der Erfindung ist vorgesehen, dass die Feder als Druckfeder ausgebildet ist und auf dem Steuerbolzen gelagert ist. Sie stützt sich an einem gehäusefesten Anschlag mit der einen Seite ab und hält den Steuerbolzen stets federbelastet in der zurückgezogenen Stellung gegen den Kolben, der damit ebenfalls entgegen dem einströmenden Druckmittel vorgespannt wird.

In einer anderen Ausgestaltung der Erfindung kann es jedoch vorgesehen sein, dass die Druckfeder nicht um den Steuerbolzen herum gelegt ist und den Steuerbolzen umgreift, sondern dass die Feder als separates Teil ausgebildet ist und z. B. als Schenkelfeder, Schraubendruckfeder oder als Elastomerpuffer ausgebildet ist, gegen den die vordere Kante des Kolbens wirkt. Der Kraftspeicher sorgt dafür, dass der Kolben stets in seiner zurückgezogenen Stellung gehalten wird.

Im Rahmen der älteren Patentanmeldung DE 10 2009 012 996 A1 war offenbart, dass unmittelbar das freie schwenkbare Ende des Messers durch den Kühlmittelstrom angeströmt wird, um so eine Einschwenkung des Messers in das Messergehäuse zu ermöglichen. Das Herausschwenken des Messers war daher durch Fliehkraft bedingt notwendig.
Die vorliegende Erfindung beschreibt in einem bevorzugten Ausführungsbeispiel die Rückstellung des Kolbens unter der Federlast eines Kraftspeichers, worauf die Erfindung jedoch nicht beschränkt ist.

In einer anderen Ausgestaltung der Erfindung kann es auch vorgesehen sein, dass die Rückstellung des Kolbens unter Einwirkung des Kühlmittels erfolgt. Zu diesem Zweck ist es erforderlich, im zulaufenden Kühlmittelkanal oder Druckmittelkanal ein Ventil anzuordnen, welches auf unterschiedliche und entgegen gesetzt gerichtete Flächen des Kolbens einwirkt.
Zu diesem Zweck ist es erforderlich, dass einerseits der Kühlmittelkanal unmittelbar auf eine erste Kolbenfläche drückt, welche den Kolben nach vorne in Richtung seiner aktiven Verschiebungsposition presst, während bei der Umschaltung des Ventils der Druckmittelkanal dergestalt umgelenkt wird, dass eine zweite, der ersten Kolbenfläche entgegen gesetzte Kolbenfläche (z. B. die Rückseite des Kolbens) angeströmt wird, um den Kolben in seine zurückgezogene Ruhelage zu bringen.

Hieraus ergibt sich, dass die Möglichkeit nicht auf die Anordnung eines Kraftspeichers zur Zurückstellung des Kolbens beschränkt ist, sondern dass der Kolben auch unter der Wirkung der Umlenkung eines umlenkbaren Druckmittels in seine Ruhestellung zurückgestellt werden kann.

Vorteil bei der vorliegenden Erfindung ist, dass durch die mittelbare Schwenkbetätigung des Messers mit der Anordnung eines Kolbens eine vom Druckmittel angeströmten Betätigungsfläche des Kolbens vorhanden ist, die eine wesentlich größere Betätigungskraft auf das Messer ausübt. Die Größe der Betätigungskraft ist nicht mehr vom Druck des Druckmittels abhängig, sondern wird entscheidend durch die Größe der Kolbenfläche bestimmt.

Im Vergleich zu einem über das Druckmittel direkt angeströmten Messer kann somit die Betätigungskraft auf das Messer auf das 20-fache gesteigert werden.

Die Anpress- oder Betätigungskraft kann durch die Gestaltung der gegenüber dem Druckmittel wirksamen Kolbenfläche in großen Grenzen verändert werden.

Damit ergibt sich nicht nur der Vorteil einer sicheren Schwenkbetätigung des oder der Messer, sonder darüber hinaus auch die Möglichkeit, dass das oder die Messer nicht nur in eine passive Stellung zurück geschwenkt werden können, sondern auch in eine aktive Stellung aus der Messerkammer heraus geschwenkt werden können.
Weiterhin ist vorteilhaft, wenn eine Bypassströmung in der den Kolben enthaltenden Zylinderkammer gegeben ist.

Damit werden die Vorteile des Standes der Technik - nämlich eine ständige Spülung des Senkwerkzeuges und vor allem des Messergehäuses - mit den Vorteilen nach der Erfindung verknüpft, denn die Erfindung sieht nun bei wesentlich größerer Betätigungskraft des oder der Messer ebenfalls eine Spülung des Senkwerkzeuges und vor allem des Messergehäuses vor.

In einer ersten Ausführung ist vorgesehen, dass der Kolben nicht dichtend in der Zylinderkammer angeordnet ist. Die Zylinderkammer hat also ein Übermaß gegenüber dem verminderten Durchmesser des Kolbens, wodurch sich eine beabsichtigte Bypassströmung des Druckmittels am Außenumfang des Kolbens in Richtung seiner Längsachse durch die Zylinderkammer hindurch ergibt.

Ebenso ist es möglich, an der Innenseite der Zylinderkammer in Längsrichtung verlaufende einseitig offene Nuten anzuordnen, welche die gewünschte Bypassströmung ermöglichen.

In einer anderen Ausführung kann der Kolben am Außenumfang über eine Reihe von in Längsrichtung ausgerichteten Bypassbohrungen verfügen, so dass das Druckmittel nicht einen gegenüber der Zylinderkammer abgedichteten Kolben anströmt. Ein Teil des Druckmittels strömt über die der Bypassbohrungen am Kolben vorbei.

Ebenso kann es vorgesehen sein, dass der Kolben zwar dichtend (oder nicht dichtend) in der Zylinderkammer verschiebbar angeordnet ist, aber über ein oder mehrere Längsbohrungen verfügt, die den Kolben durchsetzen und eine Bypassströmung des Druckmittels durch den Kolben hindurch ergeben.

Diese Bypassströmung des Druckmittels strömt in beiden Ausführungsbeispielen in eine in Längsrichtung im Senkwerkzeug angeordnete Bypassbohrung nach vorne in Richtung auf die Messerkammer. Über die Bypassbohrung erfolgt deshalb eine Spülung der Messerkammer, obwohl der Kolben unter dem Druck des Druckmediums bewegt wird.

Die beabsichtigte Undichtheit des Kolbens in der Zylinderkammer bei den obigen Ausführungsbeispielen hat den Vorteil, dass eventuell mit dem Kühlmedium mitgeführte Späne nicht zu einem Festsetzen des Kolbens führen können, weil diese Späne über die Bypassbohrungen (oder das vorgesehene radiale Spiel zwischen Kolben und Zylinderwand) am Kolben vorbei in die Bypassbohrung im Grundkörper ausgespült und in die Messerkammer eingeleitet werden, wo sie das Senkwerkzeug wieder verlassen.

Andererseits wird mit der beabsichtigten Undichtheit des Kolbens in der Zylinderkammer noch der Vorteil erreicht, dass ein steter Kühlmittelstrom für die Spülung des Messergehäuses verwendet wird.

Damit wird eine lange Lebensdauer des Kolbens bei niedrigem Verschleiß gewährleistet, denn der Kolben kann sich nicht unter der Einwirkung von möglicherweise im Kühlmittel mitgeführter Späne in der Zylinderkammer festsetzen. Es findet immer eine Zwangsspülung statt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch ein druckmittelgesteuertes Senkwerkzeug
- Figur 2:: Draufsicht auf die Stirnseite in Pfeilrichtung II in Figur 1
- Figur 3:: perspektivische Darstellung des Messers
- Figur 4:: das Senkwerkzeug nach Figur 1 mit einem eingefahrenen Messer
- Figur 5:: die gleiche Darstellung gemäß Figur 4 mit dem ausgefahrenen Messer
- Figur 6:: die Gegenüberstellung einer Kühlmittelzuführung in Verbindung mit der Schwenkbewegung des Messers im Verlaufe eines Verfahrensablaufes

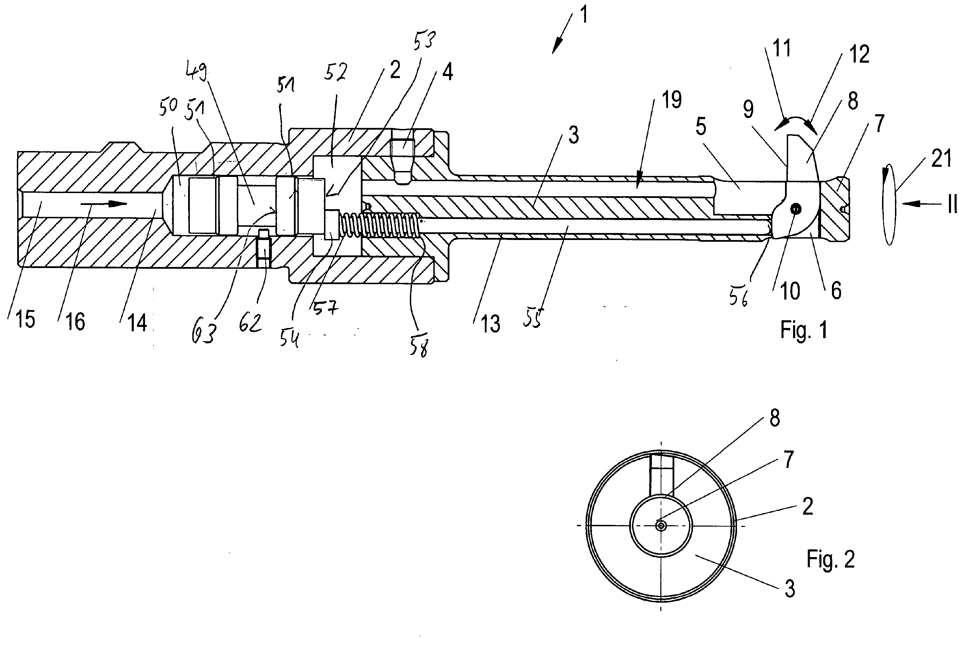

In Figur 1 ist eine einfache Form eines Senkwerkzeuges 1 dargestellt, welches im Wesentlichen aus einem zylindrischen Grundkörper 2 besteht, der in Richtung seiner Längsmittenachse drehend angetrieben ist, und zwar im gezeigten Ausführungsbeispiel, beispielsweise in Pfeilrichtung 21.

Im Innenraum des Grundkörpers 2 ist hierbei eine Zuführbohrung 15 für ein Druckmittel angeordnet.

Der Einfachheit halber wird in der folgenden Beschreibung davon ausgegangen, dass dieses Druckmittel ein Kühlmedium ist, welches sowohl zur Druckmittelsteuerung des Messers 8 dient als auch gleichzeitig zur Kühlung und Spülung der Messerkammer 5 und des Messerfensters 6.

Mit Hilfe einer Befestigungsschraube 4 ist an der Vorderseite des Grundkörpers ein etwa auch zylindrisches Messergehäuse 3 angeordnet, in dessen Innenraum eine Längsbohrung in Form eines Steuerkanals 13 geführt ist. In diesem Steuerkanal 13 ist das Druckmittel14 in Pfeilrichtung 16 strömend eingezeichnet.

Bei der Vorderseite des Messergehäuses 3 ist eine Messerkammer 5 angeordnet, in deren oberen Bereich ein Lagerbolzen 10 angeordnet ist, auf dem einseitig schwenkbar das Messer 8 angeordnet ist. Die Messerkammer ist nach hinten durch ein Messerfenster 6 verlängert und die obere Begrenzung der Messerkammer 5 ist durch die Stirnseite 7 des Messergehäuses 3 gebildet.

Das Messer 8 nach Figur 1 befindet sich in seiner ausgefahrenen Arbeitsstellung in einem Rückwärts-Senkvorgang, sodass die untere Schneidkante 9 sich schneidend und spanabhebend an einen nicht näher dargestellten Bohrungsrand anlegt.

Das Messer ist gemäß Figur 1 in Pfeilrichtung 12 somit in seiner Arbeitsstellung geschwenkt, während es in Pfeilrichtung 11 in seine Ruhestellung verschwenkt ist, so dass mindestens die Schneidkante 9 in der Messerkammer 5 eingeschwenkt wird und das Messer damit in eine passive, nicht schneidende Stellung gelangt.

In Figur 1 ist erkennbar, dass das in Pfeilrichtung 16 über die Zufuhrbohrung 15 einströmende Druckmittel14 in einen Zylinderraum 50 einströmt, in dem ein Kolben 49 frei verschiebbar und unter der Federlast einer Druckfeder 57 in einer bestimmten Position gehalten wird.

Die zurückgezogene Position des Kolbens 49 erfolgt durch Anschlagen einer quer in den Grundkörper 2 eingeschraubten Anschlagschraube 62, deren vorderes freies Ende sich an einem Anschlag 63 des Kolbens 49 anlegt.

Sobald das Druckmedium 14 auf die vordere freie Stirnseite des Kolbens 49 wirkt, verschiebt sich dieser entgegen der Federkraft der Druckfeder 57 nach rechts, wobei die Druckfeder 57 mit ihrem einen Ende an der Rückseite eines Kopfstücks 54 eines Steuerbolzens 55 anliegt, während das andere Ende der Druckfeder 57 an einem gehäusefesten Anschlag 58 anliegt.

Durch die Verschiebung des Kolbens 49 nach rechts wird somit ein Druck auf das Kopfstück 54 ausgeübt, sodass sich der Steuerbolzen 55 unter Überwindung der Federkraft der Druckfeder 57 nach rechts verschiebt, wobei sein freies vorderes Bolzenende 56 sich an dem verschwenkbaren Ende des Messers 8 anlegt und dieses verschwenkt.

Bei dieser Bewegung des Steuerbolzens 55 nach rechts wird somit das Messer 8 in Pfeilrichtung 11 in die Messerkammer 5 eingeschwenkt und somit in eine passive Stellung gebracht.

Aus der Darstellung in Figur 1 ergibt sich gleichzeitig, dass sich beim Wegfall des Druckmittels 14 die Druckfeder 57 entspannt und der Kolben 49 wieder nach links verschoben wird.

Bei Wegfall des Druckmittels 14 verschiebt sich somit der Kolben 49 in Gegenrichtung zur Pfeilrichtung 16 und das Messer wird damit freigegeben, um es fliehkraftgesteuert in Pfeilrichtung 12 um seinen Lagerbolzen 10 in seine aktive Stellung zu verschwenken.

Andererseits tritt ein Teil des Druckmittelstroms über eine Bypassbohrung 19 direkt in die Messerkammer 5 ein und spült die Messerkammer 5 und kühlt gleichzeitig die Bearbeitungsfläche der Schneidkante 9 an dem zugeordneten Bohrungsrand. Damit wird während des Zerspanungsvorganges die Messerkammer 5 und das Messerfenster 6 mit dem Druckmittel 14 gespült. Hierbei wird vorausgesetzt, dass im Bereich des Zylinderraums 50, 52 eine Reihe von in Längsrichtung verlaufenden Bypasskanälen 51 vorhanden sind, welche eine abdichtende Lagerung des Kolbens 49 in den Zylinderräumen 50, 52 verhindern, so dass das Druckmittel auch an dem Kolben 49 vorbeiströmen kann, um so den Zylinderraum 52 mit Druckmittel zu füllen, welches dann über die vorher erwähnte Bypassbohrung 19 in die Messerkammer 5 strömt.

Anstatt der Bypasskanäle kann einfach nur ein Untermaß des Kolbens in den Zylinderraum 50, 52 vorgesehen werden, so dass dieser mit Untermaß in dem Zylinderraum 50, 52 angeordnet ist, um so eine mit Spiel behaftete Verschiebung zu gewährleisten und gleichzeitig zu gewährleisten, dass das Druckmittel 14 auch an dem Kolben 49 vorbei in den Zylinderraum 52 strömen kann, um von dort in die Bypassbohrung 19 zu gelangen.

Gleichzeitig gelangt das Druckmittel 14 auch in die Längsbohrung 13, in der der Steuerbolzen 55 verschiebbar gelagert ist. Dadurch wird der Steuerbolzen 55 geschmiert und gespült. Das Druckmittel 14 wird auch über das Bolzenende 56 am Steuerbolzen 55 auf die Steuerflächen 18, 20 am Messer 8 geleitet und spült diese.

Die Figur 2 zeigt die Stirnansicht der gesamten Anordnung, aus der erkennbar ist, dass das Messer 8 in seiner Arbeitsstellung aus der Messerkammer 5 ausgeschwenkt ist.

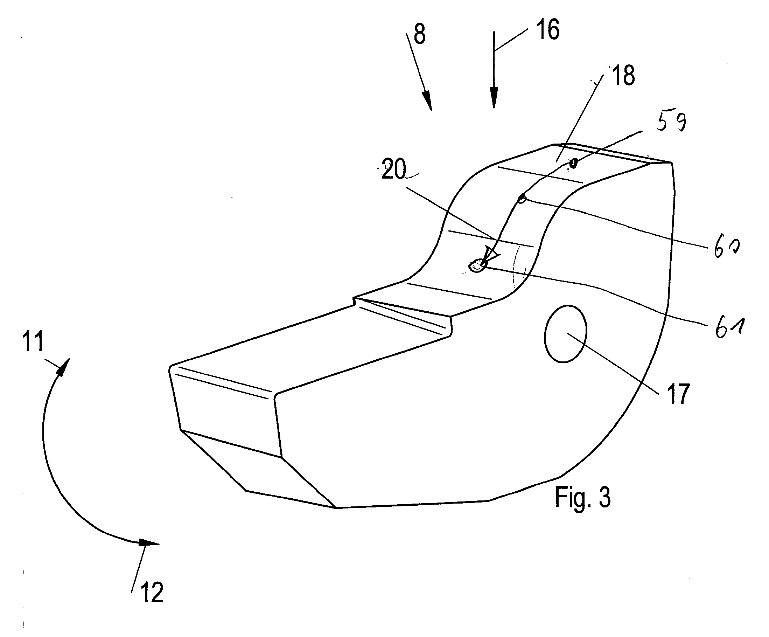

In Figur 3 ist eine perspektivische Darstellung des Messers 8 gezeigt, aus der erkennbar ist, dass die Schneidkante 9 im Bereich einer Schneidfläche angeordnet ist und dass es insgesamt zwei vom Bolzenende 56 des Steuerbolzens 55 berührte Steuerflächen 18, 20 gibt.

Aus Figur 3 ergibt sich im Übrigen, dass in dem gezeichneten Ausführungsbeispiel nach Figur 1, bei dem das Bolzenende 56 des Steuerbolzens 55 auf dem freien schwenkbaren Ende des Messers 8 lediglich aufliegt, dieses Bolzenende 56 einen Weg beim Verschwenken des Messers 8 in den Pfeilrichtungen 11, 12 von Position 59 zu Position 61 ausführt.

Es erfolgt also eine Bewegung des Bolzenendes 56 in Pfeilrichtung 60 von der Position 59 zur Position 61.

Durch die Gestaltung der Steuerfläche 20, die etwa gewölbt oder bombiert ausgebildet ist, kann die Schwenkcharakteristik und das Einfahrverhalten des Messers 8 in weitem Umfang verändert werden.

Die Steuerfläche 20 kann mehr oder weniger bombiert ausgebildet sein, sie kann auch konkave Zwischenflächen aufweisen oder konvexe Erhöhungen aufweisen, die je nach dem zu einer Veränderung des Einschwenkverhaltens des Messers 8 führen.

Die Steuerfläche 18 ist hierbei bevorzugt eben ausgebildet. Sie kann jedoch auch bombiert oder konvex oder konkav ausgeführt sein.

Statt einer losen Anlage des Kopfstückes 54 des Steuerbolzens 55 an dem vorderen Kolbenansatz 53 des Kolbens 49 kann auch hier ein Gelenk angeordnet werden, um so eine Verbindung zwischen dem Kopfstück 54 und dem Kolben 49 zu erreichen.

Statt eines Gelenkes kann auch eine starre Verbindung, z. B. eine Schraubenverbindung, vorgesehen sein.

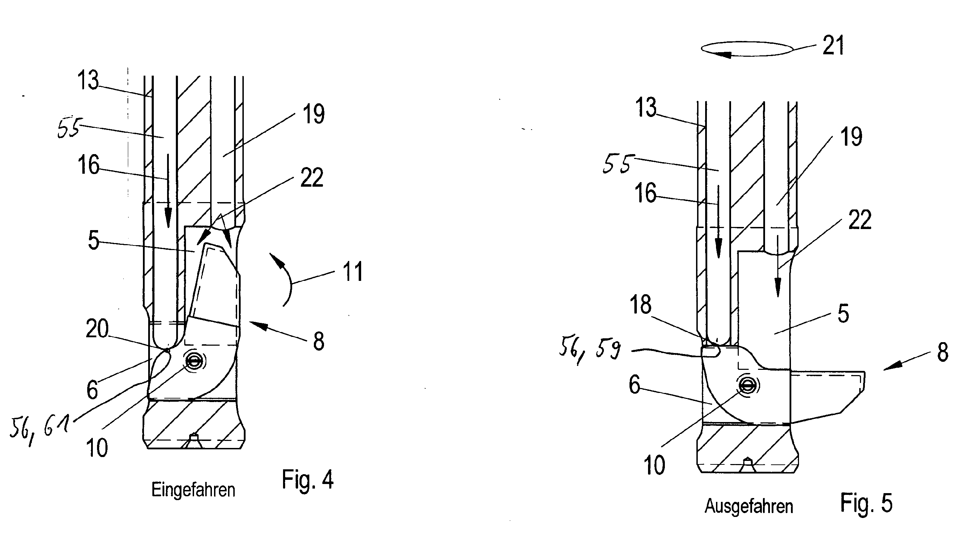

Die Figuren 4 und 5 zeigen, dass das vordere bolzenseitige Ende 56 des Steuerbolzens 55 jeweils auf die im Abstand voneinander angeordneten Steuerflächen 18, 20 einwirkt, um so das Messer nach Figur 4 entweder in Pfeilrichtung 11 in die Messerkammer 5 einzufahren oder das Messer in der in Figur 5 dargestellten Lage zu halten, wobei das Messer 8 hierbei mit Fliehkraft ausgestellt wird.

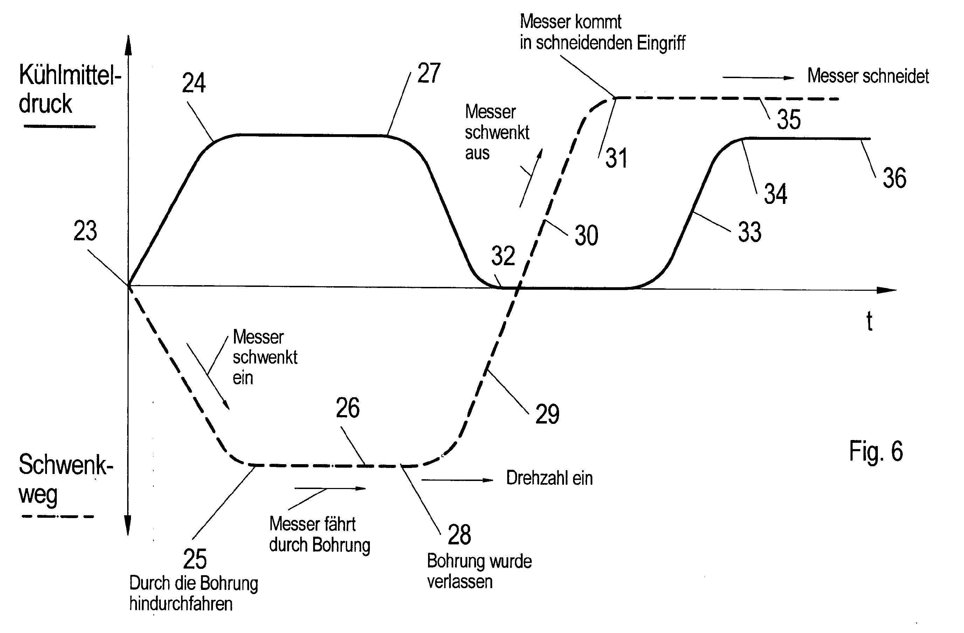

In Figur 6 ist ein typischer Bewegungsablauf in Form eines Ablaufdiagramms bei Betätigung des Messers 8 dargestellt.

Auf der Ordinate ist nach oben gerichtet der Kühlmitteldruck aufgezeichnet, während auf der Ordinate nach unten gehend der Schwenkweg des Messers eingezeichnet ist.

Der nach unten gerichtete Schwenkweg in Figur 6 bedeutet die eingefahrene Stellung des Messers, während der nach oben gerichtete Schwenkweg (positive Werte des Schwenkweges) die ausgefahrene Stellung des Messers bedeutet.

Ausgehend von der Position 23 wird zunächst angenommen, dass sowohl kein Kühlmitteldruck vorhanden ist und sich das Messer in einer undefinierten Zwischenstellung befindet.

Im Kurvenast zwischen Position 23 und 24 wird das Druckmittel eingeschaltet und das Druckmittel wirkt nun in Pfeilrichtung 16 auf die Druckfläche 18, so dass das Messer im Kurvenastbereich zwischen 23 und 25 eingefahren wird und in Position 25 seine vollkommene eingefahrene Stellung erreicht hat.

Im Übergang zwischen der Position 25 und der Position 26 fährt das Messer dann durch die Bohrung hindurch, wobei der Kühlmitteldruck zwischen den Positionen 24 und 27 aufrecht erhalten bleibt.

Ab der Position 28 fährt das Messer in eingefahrener Stellung aus der Bohrung heraus und gelangt an den rückwärtigen Bohrungsrand.

Deshalb wird bei Position 27 das Kühlmittel abgestellt und verliert bis zur Position 32 seinen vollkommenen Druck.

Weil nun kein Kühlmitteldruck mehr auf dem Messer 8 lastet, wird das Messer in der Position 29 durch Starten des Drehantriebes des Senkwerkzeuges fliehkraftbedingt nach außen verschwenkt und fährt fliehkraftbedingt aus der Messerkammer 5 heraus, sodass es mit positiven Werten bei Position 32 im Kurvenast 30 nun seinen Ausschwenkweg beginnt.

Das Ausschwenken erfolgt bis zur Position 31, wobei wesentlich ist, dass in dieser Position noch der Kühlmitteldruck weggenommen ist, um ein vollständiges Ausschwenken zu erreichen.

Bei Position 31 kommt das Messer 8 in einen zerspanenden Eingriff mit einem nicht näher dargestellten Werkstück und gleichzeitig wird über den Kurvenast 33 das Kühlmittel auf einen maximalen Druck bis auf Position 34 erhöht, so dass ab dem spanenden Eingriff ein vollkommener Kühlmittelzufluss vorhanden ist.

In der Position zwischen 34, 35 und 36 erfolgt nun die eigentliche Arbeitsstellung des Messers, welches sich im spanenden Eingriff mit dem nicht näher dargestellten Werkstück befindet.

In analoger Weise erfolgt das Zurückschwenken des Messers 8 in die Messerkammer 5 nach Beendigung der spanabhebenden Bearbeitung.

Bei Position 31 sollte also der Kühlmitteldruck möglichst niedrig sein, um das Messer in eine stabile ausgeschwenkte Lage zu bringen.

Nach Beendigung des spanabhebenden Vorganges erfolgt der gesamte Vorgang in analoger Weise rückwärts, d. h., es wird dann zunächst das Kühlmittel weggenommen, dann wird das Messer aus dem zerspanenden Eingriff mit dem Werkstück gebracht, dann wird der Drehantrieb des Senkwerkzeuges gestoppt, danach wird das Kühlmittel eingeschaltet und das Messer klappt in das Messerfenster 6 hinein und danach wird das Senkwerkzeug mit dem im Messergehäuse 3 eingeschwenkten Messer 8 durch die Durchgangsbohrung wieder zurückgefahren.

### Zeichnungslegende

- 1: Senkwerkzeug
- 2: Grundkörper
- 3: Messergehäuse
- 4: Befestigungsschraube
- 5: Messerkammer
- 6: Messerfenster
- 7: Stirnseite
- 8: Messer
- 9: Schneidkante
- 10: Lagerbolzen
- 11: Pfeilrichtung
- 12: Pfeilrichtung
- 13: Längsbohrung
- 14: Druckmittel
- 15: Zuführbohrung
- 16: Pfeilrichtung
- 17: Bohrung
- 18: Steuerfläche
- 19: Bypassbohrung
- 20: Steuerfläche
- 21: Drehrichtung
- 22: Pfeilrichtung
- 23: Position
- 24: Position
- 25: Position
- 26: Position
- 27: Position
- 28: Position
- 29: Position
- 30: Kurvenast
- 31: Position
- 32: Position
- 33: Kurvenast
- 34: Position
- 35: Kurvenast
- 36: Kurvenast
- 49: Kolben
- 50: Zylinderraum
- 51: Bypasskanal
- 52: Zylinderraum
- 53: Kolbenansatz
- 54: Kopfstück (von 55)
- 55: Steuerbolzen
- 56: Bolzenende (von 55)
- 57: Druckfeder
- 58: Anschlag
- 59: Position
- 60: Pfeilrichtung
- 61: Position
- 62: Anschlagschraube
- 63: Anschlag

## Patentansprüche

1. Druckmittel gesteuertes Senkwerkzeug (1) mit einem oder mehreren spanabhebenden Messern (8), die durch Zuführung eines Druckmittels (14) in ihrer Schwenklage betätigbar sind, wobei die Betätigung mindestens eines Messers (8) über mindestens eine vom Druckmittel (14) betätigte Kolben-Zylindereinheit (49) erfolgt, wobei das mindestens eine Messer (8) auf einem Lagerbolzen (10) exzentrisch gelagert ist und aus einer Messerkammer (5) an der Vorderseite eines Messergehäuses (3) ausschwenkbar ist, **dadurch gekennzeichnet, dass** das Ausschwenken (12) des Messers (8) mit Fliehkraft erfolgt und die Kolben-Zylindereinheit (49) einen Steuerbolzen (55) mit einem freien vorderen Bolzenende (56) aufweist, welches an einem verschwenkbaren Ende des Messers (8) anlegbar ist und dieses in die Messerkammer (5) einschwenkt.

2. Senkwerkzeug (1) nach Anspruch 1, **dadurch gekennzeichnet, dass** das Druckmittel (14) die Schwenkbewegung (11, 12) des Messers (8) über die Betätigung der Kolben-Zylindereinheit (49, 55) steuert und über mindestens eine in Längsrichtung das Senkwerkzeug angeordnete Bypassbohrung (19) für eine Spülung und Kühlung des Messers (8) sorgt.

3. Senkwerkzeug (1) nach Anspruch 1 oder 2, **dadurch gekennzeichnet, dass** das Senkwerkzeug (1) ein einziges Kippmesser aufweist.

4. Senkwerkzeug (1) nach einem der Ansprüche 1 bis 3, **dadurch gekennzeichnet, dass** das Senkwerkzeug (1) mehrere Messer aufweist, die nebeneinander oder übereinander angeordnet sind und die jeweils ausschwenkbar (12) und einschwenkbar (11) über eine zugeordnete Kolben-Zylindereinheit (49, 55) angetrieben sind.

5. Senkwerkzeug nach einem der Ansprüche 1 bis 4, **dadurch gekennzeichnet, dass** das Druckmittel (14) ein Kühlmedium ist, welches sowohl zur Druckmittelsteuerung des Messers (8), als auch zur Kühlung und Spülung der Messerkammer (5) und des Messerfensters (6) dient.

6. Senkwerkzeug nach einem der Ansprüche 1 bis 5, **dadurch gekennzeichnet, dass** die Feder als Druckfeder (57) ausgebildet ist, die den Steuerbolzen (55) federbelastet in der zurückgezogenen Stellung gegen den Kolben (49) hält, der dadurch entgegen das einströmende Druckmittel (14) vorgespannt ist.

7. Senkwerkzeug nach einem der Ansprüche 1 bis 6, **dadurch gekennzeichnet, dass** der Kolben (49) im Zylinderraum (50) mit Untermass verschiebbar gelagert ist und dadurch eine Bypassströmung des Druckmittels (14) am Umfang des Kolbens (49) vorbei die Längsbohrung (13) spült, in welcher der Steuerbolzen (55) verschiebbar gelagert ist.

8. Senkwerkzeug nach einem der Ansprüche 1 bis 7, **dadurch gekennzeichnet, dass** an der Innenseite des Zylinderraums (50, 52) in Längsrichtung verlaufende einseitig offene Nuten angeordnet sind.

9. Senkwerkzeug nach einem der Ansprüche 1 bis 8, **dadurch gekennzeichnet, dass** der Kolben (49) am Außenumfang über eine Reihe von in Längsrichtung ausgerichtete Bypassbohrungen verfügt.

10. Senkwerkzeug nach einem der Ansprüche 1 bis 9, **dadurch gekennzeichnet, dass** mit einem Umschaltventil das Druckmittel (14) zwischen einem ersten Steuerkanal und einem zweiten Steuerkanal hin und her schaltbar ist, um die Kolben-Zylindereinheit (49, 55) in beiden Richtungen zu betätigen

## Claims

1. Countersinking tool (1) controlled by pressure medium with one or more material-removing cutters (8) which can be actuated in their swivelling position by application of a pressure medium (14), wherein the actuation of at least one cutter (8) is effected by means of at least one piston and cylinder unit (49) actuated by the pressure medium (14), wherein the at least one cutter (8) is mounted eccentrically on a bearing/mounting pin (10) and can be swivelled out of a cutter chamber (5) on the front side of a cutter housing (3), **characterised in that** the outward swivelling (12) of the cutter (8) is effected by means of centrifugal force and the piston and cylinder unit (49) has a control pin (55) with a free front pin end (56) which can be applied to a swivelling end of the cutter (8) and swivels this into the cutter chamber (5).

2. Countersinking tool (1) according to claim 1, **characterised in that** the pressure medium (14) controls the swivelling movement (11, 12) of the cutter (8) through the actuation of the piston and cylinder unit (49, 55) and ensures rinsing and cooling of the cutter (8) by means of at least one bypass bore (19) arranged in the longitudinal direction of the countersinking tool.

3. Countersinking tool (1) according to claim 1 or 2, **characterised in that** the countersinking tool (1) has a single tilting cutter.

4. Countersinking tool (1) according to one of claims 1 to 3, **characterised in that** the countersinking tool (1) has a plurality of cutters which are arranged next to or above one another and which are each driven so as to be able to swivel out (12) and swivel in (11) by means of an associated piston and cylinder unit (49, 55).

5. Countersinking tool according to one of claims 1 to 4, **characterised in that** the pressure medium (14) is a cooling medium which serves both for controlling the cutter (8) by pressure medium and also for cooling and rinsing the cutter chamber (5) and the cutter window (6).

6. Countersinking tool according to one of claims 1 to 5, **characterised in that** the spring is embodied in the form of a compression spring (57) which holds the control pin (55) under spring load in the retracted position against the piston (49) which is thereby pre-loaded against the inflowing pressure medium (14).

7. Countersinking tool according to one of claims 1 to 6, **characterised in that** the piston (49) is mounted undersize in the cylinder chamber (50) so as to be displaceable and as a result of this a bypass stream of the pressure medium (14) past the circumference of the piston (49) rinses the longitudinal bore (13), in which the control pin (55) is mounted so as to be displaceable.

8. Countersinking tool according to one of claims 1 to 7, **characterised in that** grooves which are open on one side and run in the longitudinal direction are arranged on the inside of the cylinder chamber (50, 52).

9. Countersinking tool according to one of claims 1 to 8, **characterised in that** the piston (49) has a row of bypass bores aligned in the longitudinal direction on the external circumference.

10. Countersinking tool according to one of claims 1 to 9, **characterised in that** the pressure medium (14) can be switched between a first control channel and a second control channel by means of a switching valve in order to actuate the piston and cylinder unit (49, 55) in both directions.

## Revendications

1. Outil de lamage (1) commandé par moyen de pression, avec une ou plusieurs lames d'enlèvement de copeaux (8) qui sont aptes à être actionnées grâce à l'amenée d'un moyen de pression (14), dans leur position de pivotement, l'actionnement d'au moins une lame (8) se faisant par l'intermédiaire d'au moins une unité piston-cylindre (49) actionnée par le moyen de pression (14), ladite lame (8) étant montée de manière excentrique sur un tourillon (10) et étant apte à être déployée en pivotant à partir d'un logement de lame (5) sur le côté avant du boîtier de lame (3), **caractérisé en ce que** le déploiement (12) de la lame (8) se fait avec la force centrifuge, et l'unité piston-cylindre (49) comporte une tige de commande (55) avec une extrémité de tige avant libre (56) qui est apte à être appliquée contre une extrémité pivotante de la lame (8) et rétracte celle-ci dans le logement de lame (5).

2. Outil de lamage (1) selon la revendication 1, **caractérisé en ce que** le moyen de pression (14) commande le mouvement pivotant (11, 12) de la lame (8) grâce à l'actionnement de l'unité piston-cylindre (49, 55) et assure, par l'intermédiaire d'au moins un perçage de dérivation (19) disposé dans le sens longitudinal de l'outil de lamage, un rinçage et un refroidissement de la lame (8).

3. Outil de lamage (1) selon la revendication 1 ou 2, **caractérisé en ce que** l'outil de lamage (1) comporte une seule lame oscillante.

4. Outil de lamage (1) selon l'une des revendications 1 à 3, **caractérisé en ce que** l'outil de lamage (1) comporte plusieurs lames, qui sont disposées côte à côte ou les unes au-dessus des autres et qui sont entraînées chacune par l'intermédiaire d'une unité piston-cylindre (49, 55) pour pouvoir être déployées (12) et rétractées (11) en pivotant.

5. Outil de lamage (1) selon l'une des revendications 1 à 4, **caractérisé en ce que** le moyen de pression (14) est un agent de refroidissement qui sert aussi bien à la commande par moyen de pression de la lame (8) qu'au refroidissement et au rinçage du logement de lame (5) et de la fenêtre pour lame (6).

6. Outil de lamage (1) selon l'une des revendications 1 à 5, **caractérisé en ce que** le ressort est conçu comme un ressort de compression (57) qui maintient la tige de commande (55) avec une contrainte élastique dans la position rétractée, contre le piston (49), lequel piston est ainsi contraint à l'encontre du moyen de pression (14) entrant.

7. Outil de lamage (1) selon l'une des revendications 1 à 6, **caractérisé en ce que** le piston (49) est monté coulissant avec un sous-dimensionnement dans l'espace de cylindre (50), et un écoulement de dérivation du moyen de pression (14) rince ainsi, en passant sur la circonférence du piston (49), le perçage longitudinal (13) dans lequel la tige de commande (55) est montée coulissante.

8. Outil de lamage (1) selon l'une des revendications 1 à 7, **caractérisé en ce que** des rainures ouvertes unilatéralement et s'étendant dans le sens longitudinal sont disposées sur le côté intérieur de l'espace de cylindre (50, 52).

9. Outil de lamage (1) selon l'une des revendications 1 à 8, **caractérisé en ce que** le piston (49) dispose, sur sa circonférence extérieure, d'une rangée de perçages de dérivation dirigés dans le sens longitudinal.

10. Outil de lamage (1) selon l'une des revendications 1 à 9, **caractérisé en ce qu'**avec une soupape de manoeuvre, le moyen de pression (14) peut être basculé entre un premier conduit de commande et un second conduit de commande, afin d'actionner l'unité piston-cylindre (49, 55) dans les deux sens.
